# FASCICULE DE BREVET EUROPEEN

(11) **EP 0 581 670 B1**
(45) Date de publication et mention de la délivrance du brevet: **11.09.1996**
(21) Numéro de dépôt: 93401948.0
(22) Date de dépôt: 27.07.1993
(51) Int. Cl.: H01B 7/28, G02B 6/44

(54) **Filin d'étanchéité, pour câbles d'énergie et de télécommunication**
Wasserfestes Zugseil für Energie- und Nachrichtenkabel
Waterproof wire for power and communication cables

(30) Priorité: 28.07.1992 FR 9209299
(43) Date de publication de la demande: 02.02.1994
(73) Titulaire: CABLERIES DE LENS, F-62300 Lens (FR)
(72) Inventeur: Delaunois, Guy, F-62300 Lens (FR)
(74) Mandataire: Buffiere, Michelle

(56) Documents cités:
- EP-A- 0 351 100
- EP-A- 0 405 538

## Description

La présente invention concerne les éléments permettant d'assurer l'étanchéité de câbles électriques, optiques ou mixtes. Elle porte plus particulièrement sur un filin d'étanchéité, pour les câbles d'énergie et de télécommunication.

Les éléments d'étanchéité, tels que filins d'étanchéité, se montent longitudinalement dans les interstices internes et/ou externes définis entre les composants du câble et/ou hélicoïdalement sur les composants individuels ou assemblés.

De nombreuses solutions ont déjà été proposées pour leur réalisation. Elles font souvent appel à l'utilisation d'un matériau gonflant en présence d'eau, qui est dit matériau superabsorbant et forme un gel au contact de l'eau, pour empêcher ainsi la propagation de l'humidité.

Le document EP-A-0361 863 donne des réalisations d'un tel élément d'étanchéité. Dans un premier mode de réalisation, l'élément comporte une bande hydrophobe, qui est traitée par un matériau gonflant en présence d'eau, pour être rendue hydrophile et bloquer la propagation d'eau. Dans ce premier mode de réalisation, la bande est composée de fibres, en polyester ou en résine plastique, qui sont arrangées de manière aléatoire et liées à leurs intersections, en laissant des poches d'air dans la bande. Cette bande, relativement poreuse est traitée, en l'imprégnant de matériau gonflant, appliqué en solution puis séché. Ce matériau pénètre en partie dans la bande et forme un film sur elle.

Dans un autre mode de réalisation indiqué dans ce même document, l'élément d'étanchéité comporte un filin traité comme la bande précédente, ou fait de fibres gonflant en présence d'eau et alors équipé d'un ruban de maintien des fibres de ce filin. De telles fibres gonflantes sont en particulier celles connues sous la dénomination commerciales "Lanseal - F", ayant leur partie externe en matériau gonflant en présence d'eau et leur partie interne en matériau de résistance à la traction. Ces fibres gonflantes sont de coût élevé. Elles rentrent pour une part importante dans le coût de l'étanchéité réalisée sur un câble.

Le document EP-A-0351100 indique notamment de réaliser un filin d'étanchéité comportant une partie axiale de résistance, formée par un fil en matériau fibreux de résistance, tel que celui connu sous la marque déposée "KEVLAR" ou en fibre de verre, qui est recouverte d'une partie externe formée d'un matériau fibreux gonflant ou de fibres gonflant en présence d'eau, telles que les fibres "Lanseal F" précitées. Un filament de retenue assure le maintien de la partie externe sur la partie interne. En variante, le filin d'étanchéité peut être constitué exclusivement en matériau gonflant en présence d'eau et être alors connu sous la dénomination fibre "Lanseal F". En variante également, un faible pourcentage de filaments d'un fil de "Kevlar" peut être remplacé par des filaments de fibre "Lanseal F", pour être utilisé comme filin d'étanchéité, les filaments de fibre "Lanseal F" étant à priori sur la périphérie du filin résultant.

La présente invention a pour but de réaliser un filin d'étanchéité, dont la structure et la composition le rendent adaptable pour l'obtention de l'étanchéité souhaitée des câbles avec autant d'efficacité mais à coût nettement moindre que les solutions connues. Elle a pour but plus précisément d'obtenir de manière simple et aisée un compromis satisfaisant et adaptable entre le niveau d'étanchéité souhaité et le coût de cette étanchéité.

Le filin d'étanchéité, pour câbles d'énergie et de télécommunication, selon la présente invention, comportant des premières fibres susceptibles de retenir l'humidité, une structure support desdites premières fibres et un moyen de retenue desdites premières fibres assemblées relativement à ladite structure support, est caractérisé en ce qu'il est constitué par un mélange intime et sensiblement sans torsion desdites premières fibres et de deuxièmes fibres, dans lequel lesdites premières et deuxièmes fibres sont exclusivement des fibres longues, lesdites premières fibres sont absorbantes mais non gonflantes en présence d'humidité, et lesdites deuxièmes fibres forment un réseau tridimensionnel de répartition aléatoire et de séparation desdites premières fibres absorbantes, définissant ladite structure support.

Le filin présente en outre au moins l'une des caractéristiques additionnelles suivantes:
- lesdites deuxièmes fibres de répartition aléatoire et de séparation des fibres absorbantes sont des fibres non absorbantes et/ou des fibres gonflantes;
- les fibres gonflantes sont en concentration limitée, non majoritaire dans ledit mélange;
- les fibres longues sont de longueur comprise entre 15 et 50 mm et de préférence de l'ordre de 25 mm;
- ledit mélange est formé sur un filament continu axial de résistance à la traction.

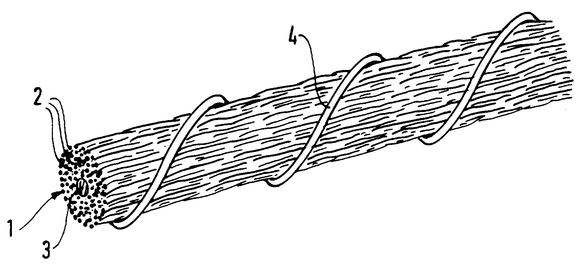

Les caractéristiques et avantages de la présente ressortiront de la description faite ci-après en regard de la figure unique donnée dans le dessin ci-annexé.

Cette figure unique représente un filin d'étanchéité selon la présente invention.

Ainsi qu'illustré, la partie active d'étanchéité 1 du filin selon l'invention est constituée exclusivement de fibres longues 2, qui sont de deux ou trois types différents, selon le niveau d'étanchéité recherché. Ces fibres 2 sont dites longues selon la terminologie adoptée dans l'industrie du filage des matières textiles. Leur longueur est sensiblement uniforme et comprise entre 15 et 50 mm. Elle est de préférence de 25 mm environ.

Les fibres de chacun de ces 2 ou 3 types n'ont pas été repérées séparément car elles sont intimement mélangées sur toute la longueur et dans toute l'épaisseur du filin, et de ce fait non identifiables les unes des autres dans la figure. Les proportions des différents types sont définies initialement pour un niveau d'étanchéité à assurer et restent quasi-constantes sur la longueur du filin.

Ces fibres 2 sont:
- des fibres absorbantes, en viscose, pour celles d'un premier type qui captent aisément et instantanément l'eau ou l'humidité, sans la retenir pour autant comme le font les fibres gonflant en présence d'eau, et
- des fibres de répartition aléatoire et de distribution des fibres absorbantes dans le mélange, qui créent un réseau tridimensionnel non constitué au départ et non structuré retenant les fibres absorbantes.

Ces fibres de répartition aléatoire et de distribution sont constituées elles-mêmes, selon le niveau d'étanchéité recherché, par:
- des fibres non absorbantes, dites neutres, pour celles d'un deuxième type, en particulier en polypropylène ou analogue, qui conduisent l'eau en surface et font que cette eau est immédiatement captée par les fibres absorbantes, et/ou:
- des fibres gonflantes, pour celles d'un troisième type, qui sont superabsorbantes et forment un gel au contact de l'eau, ces fibres gonflantes captant l'eau moins rapidement que les fibres absorbantes mais la retenant.

Ces fibres gonflantes éventuellement utilisées avec ou sans les fibres neutres, sont de manière connue à partie axiale, formée de matériau fibreux non absorbant et dit neutre, qui est entourée de matériau gonflant. Elles sont utilisées dans le mélange constituant la partie active pour l'obtention d'un niveau d'étanchéité élevé, c'est-à-dire pour des conditions d'environnement sévères en humidité des câbles.

La partie active 1, constituée par le mélange de ces deux ou trois types de fibres longues 2, est formée de préférence sur un filament axial continu 3 de résistance à la traction, donnant au filin sa rupture de charge. Ce filament 3 est en particulier en polyester, en nylon ou autre matériau analogue. Un autre filament continu 4 est enroulé hélicoïdalement, à pas long, autour de la partie active et assure la retenue des fibres qui la constitue. Ces deux filaments 3 et 4 sont insensibles à l'eau et ne la conduise pas.

Le mélange intime de ces fibres longues est réalisé par des techniques déjà existantes dans l'industrie du filage des matières textiles. L'obtention de la partie active reste inchangée quelle que soit sa constitution en deux ou trois types de fibres et les concentrations des types de fibres. Ce sont les concentrations de ces différents types de fibres, qui définissent à elles seules le niveau d'étanchéité des filins et rendent ce niveau adaptable en fonction des conditions d'environnement de chaque câble dans lequel ils sont utilisés. Elles permettent en conséquence de maîtriser parfaitement l'étanchéité de chaque câble équipé de tels filins, pour le niveau souhaité et l'obtention de celui-ci à moindre coût.

L'efficacité des filins selon l'invention a été testée sur des séries de câbles d'énergie, ceci pour différentes concentrations des types de fibres longues dans la partie active des filins d'étanchéité en place dans les câbles des différentes séries. En regard de ces tests, on précise que les câbles testés sont identiques et équipés de la même manière et avec le même nombre de filins, que les filins des câbles d'une même série sont identiques, que les tests ont été effectués pour des conditions environnantes d'humidité relativement sévères comparativement aux conditions courantes existantes.

Les résultats de tests sont consignés dans le tableau qui suit pour différentes concentrations de fibres gonflantes, notées F-Abs, et de fibres non absorbantes et dites neutres, notées F-N.Abs, et/ou de fibres gonflantes, notées F-S-Abs, dans la partie active des filins équipant les câbles testés.

| F-Abs % | F-N.Abs % | F-S.Abs % | L(cm)/Ta | % L≥Lmax | L(cm)/Ts | n |
|---|---|---|---|---|---|---|
| 50 | 50 | 0 | 55 | 10 | 80 | 40 |
| 20 | 60 | 20 | 37 | 5 | 40 | 60 |
| 35 | 30 | 35 | 21 | 0 | 40 | 70 |
| 70 | 0 | 30 | 10 | 0 | 30 | 70 |
| 35 | 0 | 65 | 10 | 0 | 30 | 85 |

Ces résultats donnent pour chacune des séries de câbles:
- dans la colonne intitulée L(cm)/Ta, la propagation en cm d'humidité à la température ambiante ou à froid, après 24 heures environ, dans les câbles testés et dits conformes de la série concernée,
- la colonne intitulée % le pourcentage de tests défectueux c'est-à-dire de câbles dits non conformes de chaque série, en regard d'une propagation d'humidité à froid L égale ou supérieure à une valeur de propagation maximale admissible Lmax, Lmax étant pour ces séries de câbles de 150 cm,
- dans la colonne intitulée L (cm)/Ts, la propagation en cm d'humidité à la température de service ou à chaud, après 10 cycles de test de 4 heures environ sur les câbles conformes, et
- dans la colonne intitulée n, la performance ou nombre de cycles de test à chaud réalisé jusqu'à l'obtention de la propagation maximale admissible d'humidité.

Ces résultats font apparaître que la présence des fibres gonflantes dans la partie active n'est pas indispensable pour assurer dans les conditions courantes l'étanchéité du câble de manière efficace et satisfaisante. Ceci permet alors une réduction substantielle du coût de l'étanchéité des câbles correspondants, compte tenu que ces fibres gonflantes représentent la partie la plus importante du coût des filins.

Ils font également ressortir que pour des conditions environnantes sévères, précisément adoptées pour ces tests, il n'est absolument pas nécessaire de prévoir une concentration importante de fibres gonflantes, lorsque celles-ci sont requises, mais qu'une concentration limitée restant non majoritaire de fibres gonflantes conduit à des résultats pratiquement aussi satisfaisants et largement suffisants.

En outre, la propabilité d'incident, que traduit dans ce tableau le pourcentage des tests non conformes, n'est quasi pas modifiée par rapport à celle des filins en fibres gonflantes ou à concentration importante de fibres gonflantes. En pratique une concentration de l'ordre de 25% de fibres gonflantes dans la partie active est tout à fait suffisante pour des conditions environnantes sévères et conduit à une fiabilité équivalente à celle des filins nettement plus chers connus.

La partie active, exclusivement en fibres longues mélangées et simplement retenues assemblées, sans torsion sensiblement des fibres longues et sans structure établie de support initial, est particulièrement simple à réaliser. Elle permet l'obtention de filins d'étanchéité adaptés et de coût plus ou moins réduit par le simple choix des concentrations des deux ou trois types possibles de fibres longues, ce choix initial des concentrations n'entraînant aucun problème ou modification dans le mode de réalisation du filin adapté pour l'étanchéité requise.

## Revendications

1. Filin d'étanchéité, pour câbles d'énergie et de télécommunication, comportant des premières fibres susceptibles de retenir l'humidité, une structure support desdites premières fibres et un moyen de retenue desdites premières fibres assemblées relativement à ladite structure support, caractérisé en ce qu'il est constitué par un mélange intime et sensiblement sans torsion (1) desdites premières fibres et de deuxièmes fibres, dans lequel lesdites premières et deuxièmes fibres (2) sont exclusivement des fibres longues, lesdites premières fibres sont absorbantes mais non gonflantes en présence d'humidité, et lesdites deuxièmes fibres forment un réseau tridimensionnel de répartition aléatoire et de séparation desdites premières fibres absorbantes, définissant ladite structure support.

2. Filin d'étanchéité selon la revendication 1, caractérisé en ce que lesdites deuxièmes fibres de répartition aléatoire et séparation sont des fibres non absorbantes et dites neutres.

3. Filin d'étanchéité selon la revendication 1, caractérisé en ce que lesdites deuxièmes fibres de répartition aléatoire et de séparation sont des fibres gonflantes en présence d'eau.

4. Filin d'étanchéité selon la revendication 1, caractérisé en ce que lesdites deuxièmes fibres de répartition aléatoire et de séparation sont des fibres non absorbantes et dites neutres et des fibres gonflantes en présence d'humidité.

5. Filin d'étanchéité selon l'une des revendications 3 et 4, caractérisé en ce que lesdites fibres gonflantes sont en concentration limitée, restant non majoritaire, dans ledit mélange intime.

6. Filin d'étanchéité selon l'une des revendications 1 à 5, caractérisé en ce que lesdites fibres longues sont de longueur comprise entre 15 et 50 mm, et l'ordre de 25 mm de préférence.

7. Filin d'étanchéité selon la revendication 6, caractérisé en ce qu'il comporte en outre un filament continu axial (3) de résistance à la traction.

## Patentansprüche

1. Dichtseil für Starkstrom- und Fernmeldekabel, das erste Fasern, die die Feuchtigkeit zurückhalten können, eine Trägerstruktur für diese ersten Fasern und ein Mittel für den Zusammenhalt dieser ersten zusammengefügten Fasern in Bezug auf die Trägerstruktur enthält, dadurch gekennzeichnet, daß es aus einer guten und im wesentlichen torsionsfreien Mischung (1) der ersten Fasern und von zweiten Fasern besteht, wobei die ersten und zweiten Fasern (2) ausschließlich lange Fasern sind und die ersten Fasern absorbierend, aber bei Feuchtigkeit nicht quellfähig sind, während die zweiten Fasern ein dreidimensionales Netz willkürlicher Verteilung und Trennung der ersten absorbierenden Fasern bilden, das die Trägerstruktur definiert.

2. Dichtseil nach Anspruch 1, dadurch gekennzeichnet, daß die zweiten Fasern mit willkürlicher Verteilung und Trennung nicht-absorbierende, sogenannte neutrale Fasern sind.

3. Dichtseil nach Anspruch 1, dadurch gekennzeichnet, daß die zweiten Fasern mit willkürlicher Verteilung und Trennung in Wasser quellfähige Fasern sind.

4. Dichtseil nach Anspruch 1, dadurch gekennzeichnet, daß die zweiten Fasern mit willkürlicher Verteilung und Trennung nicht-absorbierende, sogenannte neutrale Fasern und bei Feuchtigkeit quellfähige Fasern sind.

5. Dichtseil nach einem der Ansprüche 3 und 4, dadurch gekennzeichnet, daß die quellfähigen Fasern in einer begrenzten, nicht mehrheitlichen Konzentration in der Mischung vorliegen.

6. Dichtseil nach einem der Ansprüche 1 bis 5, dadurch gekennzeichnet, daß die langen Fasern eine Länge zwischen 15 und 50 mm und vorzugsweise von etwa 25 mm haben.

7. Dichtseil nach Anspruch 6, dadurch gekennzeichnet, daß es außerdem einem durchgehenden axialen, zugfesten Faden (3) besitzt.

## Claims

1. Waterproofing serving for power cables and telecommunications cables, said serving including first fibers suitable for retaining moisture, a support structure for supporting said first fibers, and means for retaining said first fibers as assembled together relative to said support structure, said serving being characterized in that it is constituted by a substantially twist-free intimate blend (1) of said first fibers and of second fibers, in which blend both said first fibers (2) and said second fibers (2) are exclusively long fibers, said first fibers are absorbent but do not expand in the presence of moisture, and said second fibers form a three-dimensional lattice which randomly distributes and separates said absorbent fibers, and which defines said support structure.

2. Waterproofing serving according to claim 1, characterized in that the random-distribution and separation second fibers are non-absorbent "neutral" fibers.

3. Waterproofing serving according to claim 1, characterized in that the random-distribution and separation second fibers are expandable fibers which expand in the presence of water.

4. Waterproofing serving according to claim 1, characterized in that the random-distribution and separation second fibers are non-absorbent "neutral" fibers and expandable fibers which expand in the presence of moisture.

5. Waterproofing serving according to claim 3 or 4, characterized in that said expandable fibers are in a limited minority in said intimate blend.

6. Waterproofing serving according to any one of claims 1 to 5, characterized in that the length of said long fibers lies in the range 15 mm to 50 mm, and is preferably about 25 mm.

7. Waterproofing serving according to claim 6, characterized in that it further includes a continuous axial traction-withstanding filament (3).
